# EUROPEAN PATENT APPLICATION

(11) **EP 4 686 497 A1**
(43) Date of publication of application: **04.02.2026**
(21) Application number: 25192228.2
(22) Date of filing: 28.07.2025
(51) Int. Cl.: A63F 13/355, G06N 3/0495, G06T 3/4046, G06T 3/4053

(54) **GRAPHICS PROCESSING**

(30) Priority: 29.07.2024 GB 202411059
(71) Applicant: Sony Interactive Entertainment Inc., Tokyo 108-0075 (JP)
(72) Inventor: COCKRAM, Philip, London, W1F 7LP (GB); GOLDMAN, Daniel, London, W1F 7LP (GB)
(74) Representative: Fish & Richardson P.C.

(57) **Abstract**

A computer-implemented method of generating a multi-frame super resolution, MFSR, graphics output for a video gaming system during gameplay, comprising: using a trained artificial neural network, ANN, comprising a plurality of weights and activations to perform multi-frame super resolution, MFSR, based on input graphics data from a game deployed on a video gaming system, to generate a MFSR graphics output; monitoring usage of a processing unit of the video gaming system during gameplay; and varying a precision of the weights and/or activations used in the performing MFSR, based on the monitored usage of the processing unit. A corresponding video gaming system and computer program product is also provided.

## Description

### FIELD OF THE INVENTION

The present invention is in the field of video gaming systems and relates to methods and systems for graphics processing.

### BACKGROUND

The development of modern video games has seen continuous advances in the complexity and realism of the graphics, driven by ongoing improvements in hardware, software and rendering techniques. These advances have enabled developers to create increasingly immersive and visually striking gaming experiences.

One known technique for increasing the complexity and realism of graphics is multi-frame super resolution (MFSR). In MFSR, multiple low-resolution images of the same scene (e.g. a sequence of low-resolution image frames) are "fused" to generate a higher-resolution ("super resolution") image of the same scene. MFSR may be implemented using a trained neural network such as a convolutional neural network (CNN) that infers the resulting higher-resolution image from the lower resolution input data.

However, although MFSR can provide enhanced graphics output in terms of increased resolution, a large amount of time is required to perform the necessary calculations, particularly on high-resolution hardware such as 4K and 8K displays. When an application or game has a high load point then the framerate of the MFSR graphics output can suffer, leading to a reduced quality experience for the user. This is particularly problematic in fast-paced games.

One technique for mitigating this issue is to deploy a dynamic resolution process. In such a process, the resolution of the graphics output may be temporarily reduced when there is a high load point in order to maintain an acceptable frame rate at the output. However, since dynamic resolution can change depending on the system's performance, the resolution may not be consistent throughout the game. This can lead to a less stable gaming experience, especially in fast-paced games where the resolution may change frequently. Another challenge with dynamic resolution is that the updated (reduced) resolution may be lower than the native resolution of the game, resulting in a less detailed and less sharp image. Dynamic resolution can also introduce additional processing overhead, which can lead to increased input lag and a less responsive gaming experience.

An alternative technique to mitigate the issues resulting from high load points would be to actively reduce the framerate temporarily. However, this will be likely to introduce an undesirable "juddering" effect and be quite noticeable to the user.

There is therefore a requirement for a solution to overcome these issues.

### SUMMARY OF INVENTION

In accordance with a first aspect of the invention, there is provided a computer-implemented method of generating a multi-frame super resolution, MFSR, graphics output for a video gaming system during gameplay, comprising:
using a trained artificial neural network, ANN, comprising a plurality of weights and activations to perform multi-frame super resolution, MFSR, based on input graphics data from a game deployed on a video gaming system, to generate a MFSR graphics output;
monitoring usage of a processing unit of the video gaming system during gameplay; and
varying a precision of the weights and/or activations used in the performing MFSR, based on the monitored usage of the processing unit.

By (e.g. dynamically) varying a precision of the weights and/or activations used in performing the multi-frame super resolution, the present invention advantageously optimises memory access and computation times for generating the MFSR graphics output in dependence on the monitored usage of the processing unit during gameplay. For example, if the usage of the processing unit increases, then the precision of the weights and/or activations may be reduced in response to the detected increase, in order that the computation time of the MFSR graphics output is reduced.

The method may comprise detecting a high computational load event during gameplay; and in response to the detection of the high computational load event, reducing the precision of the weights and/or activations used in the performing MFSR. In this way, the present invention does not change the resolution (i.e. number of pixels) of the MFSR output in order to improve performance when a high computational load event it detected; rather, the accuracy of the ANN inference is reduced through a reduction of the precision of the weights and/or activations of the model. However, this reduction in the accuracy of the ANN inference is acceptable in order to maintain a stable gaming experience (e.g. smooth perceived animation and maintained resolution) for the user.

Herein, a reduction in the precision of the weights and/or activations of a neural network may be referred to as quantization of the neural network. Similarly, a neural network having weights and/or activations of relatively lower precision in comparison with a related model having higher precision weights and/or activations may be referred to as a quantized neural network (e.g. with respect to the related higher precision model).

As known in the art, the trained ANN comprises a plurality of layers of connected neurons. Each neuron has a (typically non-linear) activation function that calculates a neuron output based on the inputs to the neuron together with their weights and bias. Herein, the output of a neuron (i.e. the output of the activation function acting on the linearly transformed input) is referred to as an activation. This activation may then be fed into the next layer of the network.

In its original (or "native") form, the weights and activations of the ANN typically have a relatively high precision data type (e.g. float32 occupying 32 bits of computer memory). In the present invention, when a high computational load event is detected during gameplay, the weights and/or activations used to perform MFSR are quantized in order to reduce their precision, thereby occupying less computer memory and reducing the computation time of the ANN calculations.

The variation in precision (e.g. quantization) may be applied to the weights only, the activations only, or a combination of both. It is envisaged that in some embodiments the variation in precision may be applied to only a subset of the weights and/or activations. In some embodiments, the precision of the biases may additionally be varied.

As discussed, a reduction in the precision of the weights and/or activations may be performed in response to the detection of a high computational load event during gameplay. This may be the calculation of a high load from the processor or processors performing the method steps, for example calculation of a high load from a graphics processing unit (GPU).

Typically, the high computational load event comprises a detected frame rate of the MFSR graphics output and/or a frame rate of the input graphics data being below a predetermined threshold. For example, the predetermined threshold may be set at 60 frames per second (fps) to provide a perceived smooth animation experience for the user. If the frame rate of the MFSR output is detected to drop below 60 fps, then this would be indicative of a high computational load event and the reduction in precision of the weights and/or activations would be performed. In embodiments in which the high computational load event comprises a detected frame rate of the MFSR graphics output, it will be appreciated that the predetermined threshold may be adjusted accordingly dependent on the hardware involved and/or the game being deployed. Alternatively or additionally, the high computational load event may comprise a detected frame rate of the input graphics data being below a predetermined threshold, for example if the time taken to render a "low resolution" image used to generate the MFSR output is greater than a predetermined threshold.

The detection of the high computational load event is preferably determined over a (typically predetermined) time period. The time periods may be discrete or may be overlapping in a "sliding window" arrangement. Such a predetermined time period may be between 30ms (~2 frames at 60fps) and 0.5 seconds. For example, in some embodiments, a reduction in precision may be caused if the average (e.g. mean) frame rate of the MFSR output over the time period is less than the predetermined threshold.

Alternatively or in addition, the high computational load event may comprise a game event. For example, the camera's view may have moved to include a large amount of highly complex geometry and/or materials. In another example of a game event, the camera/player may have entered a new postprocessing volume which requires additional loading/unloading of computationally expensive effects. Detection of such game events that are typically indicative of an imminent increase in computational resources required to render the associated graphics.

As has been discussed, the method of the present invention comprises varying a precision of the weights and/or activations used in the performing MFSR, based on the monitored usage of the processing unit. Preferably, the video gaming system comprises a memory storing a plurality of trained ANNs, each trained ANN being configured to perform MFSR to generate an MFSR graphics output based on input graphics data from a game deployed on the video gaming system, and wherein the weights and/or activations of the plurality of trained ANNs have different precisions; and the varying a precision of the weights and/or activations used in the performing MFSR comprises selecting one of the plurality of trained ANNs from the memory based on the monitored usage of the processing unit.

In this way, the variation in the precision of the weights and/or activations is performed by selecting one of a plurality of pre-calculated ANNs having different precisions dependent on the monitored usage of the processing unit. The selection of a trained ANN from memory advantageously increases the speed with which the precision of the weights and/or activations may be varied in dependence on the monitored processor usage.

In embodiments, the plurality of trained ANNs have the same architectures (e.g. arrangement of nodes and connections), and vary in the precision of the weights and/or activations. The models are trained to give as similar output as possible for the same input. For example, the weights of the highest precision model may have been used as the initial weights (with reduced precision) in the training of the lower precision model(s). In this way, the plurality of pre-calculated trained ANNs are related to each other.

The plurality of (pre-calculated) trained ANNs are preferably stored in cache memory.

Typically, the plurality of trained ANNs stored in memory comprises a first trained ANN having weights and/or activations stored at a first precision and a second trained ANN having weights and/or activations stored at a second precision, wherein the second precision is lower the first precision. The weights and/or activations of the second trained ANN may be quantized with respect to the weights and/or activations of the first trained ANN. Thus, for example, where a high computational load event is detected, the second trained ANN having a lower precision may be selected in preference to the first trained ANN in order to reduce the computational load on the processor.

Preferably, the plurality of trained ANNs stored in memory comprises a third trained ANN having weights and/or activations stored at a third precision that is different from both the first precision and the second precision. Advantageously, by providing three (or more) ANNs having different precisions, the present invention is capable of dynamically adjusting the level of precision with which the MFSR is performed instead of using a fixed scale factor.

Preferably, the method comprises determining a quantization level in accordance with the monitored usage of the processing unit; and wherein the step of selecting one of the plurality of trained ANNs from the memory is performed in accordance with the determined quantization level. The quantization level is typically a discrete variable but in some embodiments may be a continuous function. In preferred embodiments, each quantization level may be associated with a predetermined frame rate range.

Preferably, each of the plurality of trained ANNs stored in memory is associated with a respective quantization level. The correspondence between each quantization level and associated stored ANN may be stored in the form of a look-up table.

In the examples outlined above, the variation in the precision of the weights and/or activations was caused by selection of one of a plurality of trained ANNs having different precisions. In alternative embodiments, the varying a precision of the weights and/or activations used in the performing MFSR may comprise varying the precision of the weights and/or activations of the ANN used to perform MFSR in real-time. In other words, the video gaming system may comprise a single trained artificial neural network, with the weights and/or precisions of the ANN being rounded and/or truncated ("quantized") in real-time in accordance with the monitored processor usage. Although such embodiments require less storage space than use of a plurality of pre-calculated models of different precision, the quality of the MFSR inference may be a relatively reduced quality.

Typically, the input graphics data comprise a plurality of (e.g. sequential) low-resolution game image frames. The input graphics data may comprise a time-ordered sequence of low-resolution game image frames. The input graphics data typically comprise a plurality of previous low-resolution frames in addition to the "current" frame, and therefore comprises temporal information. Herein, the term "low-resolution" in the context of image frames is used to refer to image frames that have not been rendered using MFSR. The plurality of low-resolution image frames that are input into the trained ANN are typically rendered using a conventional graphics pipeline as is known in the art. For example, the low-resolution image frames may typically have been rendered through application, geometry and rasterization stages of a conventional graphics pipeline. In this way, the input graphics data from the game deployed on the system includes input graphics data derived from the game.

Typically, the MFSR graphics output comprises a plurality of high-resolution game image frames. Typically, each MFSR output image is based on a predetermined number of sequential "low resolution" input images Herein, the term "high-resolution" in the context of image frames is used to refer to image frames that have been rendered using MFSR.

Preferably, the method of the present invention further comprises outputting the MFSR graphics output to a display device. The display device may be a TV screen or a computer monitor, for example.

As discussed above, the trained ANN(s) are configured to perform multi-frame super resolution based on a plurality of input low-resolution image frames. The training of the ANN(s) may be performed using techniques known in the art. Typically, the ANN is trained to learn a relationship, or mapping, between low-resolution and high-resolution images. Preferably, the trained ANN comprises (or is) a convolutional neural network (CNN). In some embodiments, the inputs to the trained ANNs may comprise motion, depth and colour buffer features.

In accordance with a second aspect of the invention, there is provided a video gaming system for generating a multi-frame super resolution, MFSR, output during gameplay, comprising:
one or more trained artificial neural networks, ANNs, comprising a plurality of weights and activations, configured to perform multi-frame super resolution, MFSR, based on input graphics data from a game deployed on the video gaming system, to generate an MFSR graphics output;
a computational load monitor configured to monitor usage of a processing unit of the video gaming system during gameplay; and
a quantization manager configured to vary a precision of the weights and/or activations used in the performing MFSR, based on the monitored usage of the processing unit.

Thus, the video gaming system of the second aspect of the invention provides all of the benefits outlined above with respect to the first aspect of the invention.

Preferably, the computational load monitor comprises a frame rate monitor configured to monitor a frame rate of the MFSR graphics output and/or a frame rate of the input graphics data.

Preferably, the video gaming system comprises a memory storing a plurality of trained ANNs, each trained ANN being configured to perform MFSR to generate an MFSR graphics output based on input graphics data from a game deployed on the video gaming system, and wherein the weights and/or activations of the plurality of trained ANNs have different precisions; and the quantization manager is configured to vary a precision of the weights and/or activations used in the performing MFSR by selecting one of the plurality of trained ANNs from the memory based on the monitored usage of the processing unit.

The plurality of trained ANNs stored in memory may comprise a first trained ANN having weights and/or activations stored at a first precision and a second trained ANN having weights and/or activations stored at a second precision, wherein the second precision is lower the first precision; preferably wherein the plurality of trained ANNs stored in memory comprises a third trained ANN having weights and/or activations stored at a third precision that is different from both the first precision and the second precision.

In accordance with a third aspect of the invention, there is provided a video gaming system for generating a multi-frame super resolution, MFSR, output during gameplay, comprising at least one processor in communication with at least one memory device, the at least one memory device having stored thereon instructions for causing the at least one processor to perform the method of any of the examples described above in relation to the first aspect of the invention.

In accordance with a fourth aspect of the present invention, there is provided a computer program product comprising instructions which, when executed by one or more processors, cause the processor(s) to perform the method of any of the examples described above in relation to the first aspect of the invention.

The invention also provides a non-transitory computer-readable medium comprising instructions which, when executed by one or more processors, cause the processor(s) to perform the method of any of the examples described above in relation to the first aspect of the invention.

### BRIEF DESCRIPTION OF DRAWINGS

Examples of methods and systems according to embodiments of the present invention will now be described with reference to the appended drawings, in which:-
Figure 1A illustrates a flow chart outlining the principal steps of a method in accordance with an embodiment of the invention;
Figure 1B illustrates a flow chart outlining the principal steps of a method according to an embodiment of the present invention;
Figure 2 schematically illustrates various components of a video gaming system in accordance with an embodiment of the present invention;
Figure 3 illustrates a flow chart outlining the steps of a method according to an embodiment of the present invention;
Figure 4 schematically illustrates various components of a video gaming system in accordance with an embodiment of the present invention; and
Figure 5 schematically illustrates a video gaming system in accordance with an embodiment of the present invention.

### DETAILED DESCRIPTION

### Overview

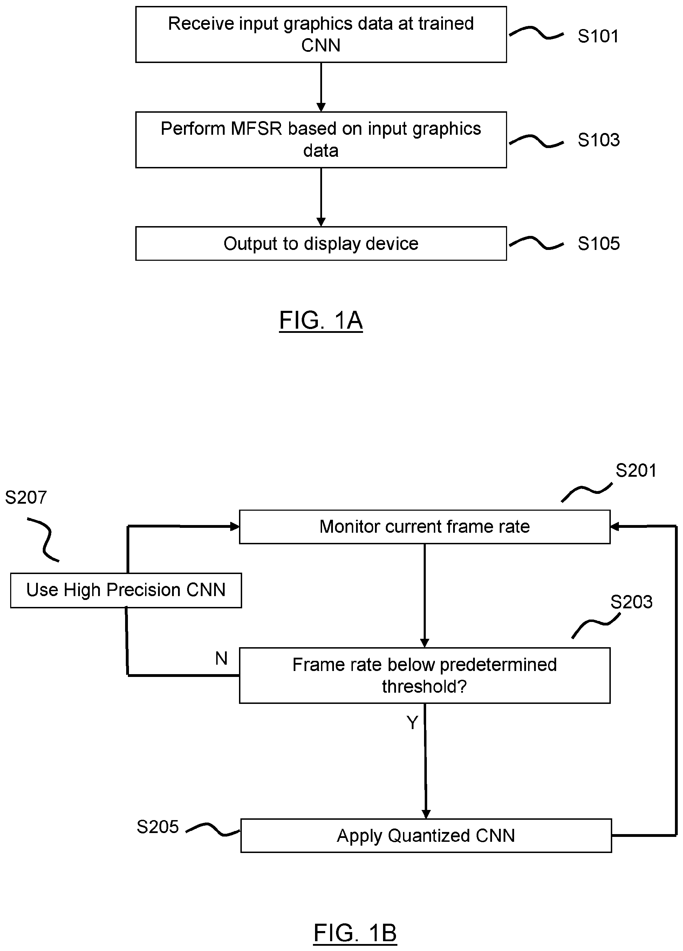

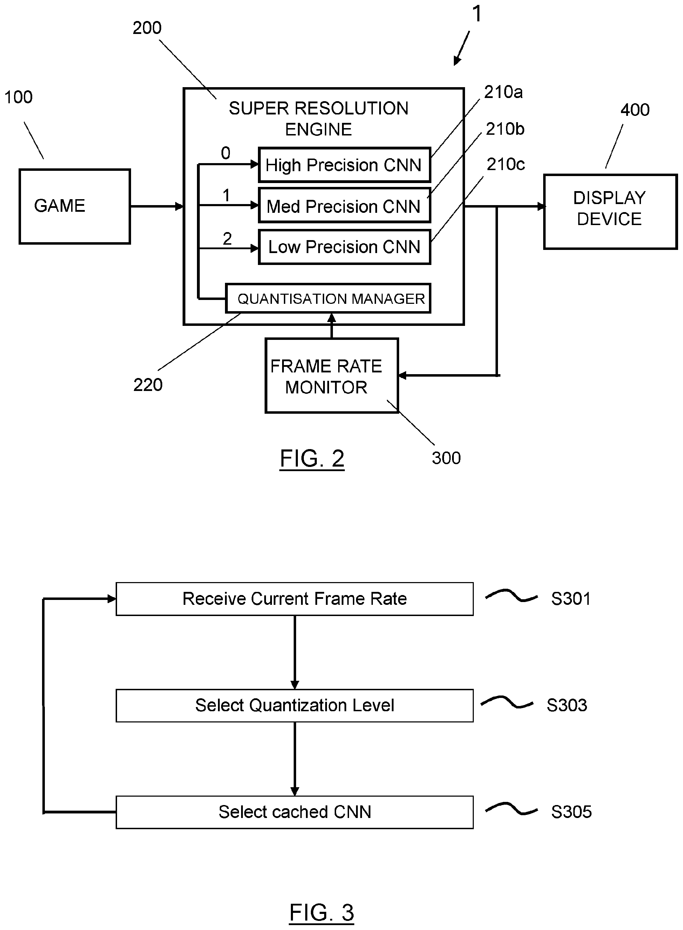

Figure 1A is a flow chart outlining the principal steps performed when rendering graphics using multi-frame super resolution (MFSR) when deploying a video game on a video gaming system in accordance with the present invention. With further reference to Figure 2 which schematically illustrates various modules of a video gaming system 1 according to the invention, at step S101, the method comprises receiving, at a trained convolutional neural network (CNN), input graphics data from a game 100 deployed on the system 1. The trained CNN is configured to generate a multi-frame super-resolution (MFSR) graphics output. As shown in Figure 2, the example video gaming system 1 comprises three cached CNNs 210a, 210b, 210c, labelled "high", "medium" and "low" precision respectively. The MFSR is performed by a selected one of these CNNs dependent on the monitored processor usage as will be described further herein.

The input graphics data typically comprise a plurality (e.g. a time-ordered sequence) of low-resolution image frames that have been rendered by the graphics pipeline of the video gaming system. In the example of Figure 2, the CNNs 210a, 210b, 210c are shown as being a constituent part of a super resolution engine 200. The super resolution engine 200 receives the raw image data from the game 100 and performs various steps of the graphics pipeline to generate the low-resolution image frames from the raw image data. The raw image data received from the game may, for example, include different virtual objects, materials and lighting effects that may be present within a scene to be rendered based on gameplay events. These raw image data inputs are received by the super resolution engine 200 which performs various processes in a graphics rendering pipeline to render the low-resolution image frames, as is known in the art.

The low-resolution image frames (input graphics data) are then fed into the selected "high", "medium" or "low" precision trained CNN that is configured to perform multi-frame super resolution based on the input graphics data. At step S103, MFSR is performed by the selected CNN based on the input graphics data in order to generate a plurality of image frames having a higher resolution than those of the input graphics data. The plurality of "super-resolution" image frames output by the CNN may be referred to as an MFSR graphics output.

At step S105, the MFSR graphics output is output to a display device 400 such as a television screen or a computer monitor. Depending on the graphics pipeline used, the MFSR graphics output from the CNN may be directly output to the display device, or may be processed by further components of the graphics pipeline of the super resolution engine 200 before being output to the display device 400.

The super resolution engine 200 is typically implemented in the engine code of the video gaming system.

As seen in Figure 2 and briefly described above, the super resolution engine 200 comprises three cached CNNs 210a, 210b, 210c, respectively labelled as "High", "Medium" and "Low" Precision. The weights of the high precision CNN are stored at the highest precision (e.g. float32 data type) of the cached models. In the medium 210b and low 210c precision CNNs, the equivalent weights are stored at lower precisions than the high precision CNN 210a, with the weights of the low precision CNN 210c having the lowest precision data type of the cached CNNs. The medium and low precision CNNs may be termed "quantized" CNNs as the weights are quantized (e.g. rounded and/or truncated) with respect to the high precision model 210a. Although Figure 2 illustrates three cached models, in some embodiments only two CNNs may be stored, or alternatively four or more models with different precision levels may be stored.

For ease of description, in the presently described example we refer to the differences in precision of the weights of the "high", "medium" and "low" precision models. However, alternatively or in addition, the models may vary in the precision of the model activations.

The high precision CNN 210a provides the most accurate/precise inferences of the MFSR graphics output, and this is the "default" model used by the super resolution engine 200. However, the high precision of the model weights and activations requires significant computational storage and processing requirements which can lead to increased processor loads and accompanying reductions in output frame rate. In such scenarios, the medium 210b or low 210c precision CNN is employed in place of the high precision model 210a in order to reduce computational load, as will now be described in further detail.

Figure 1B is a flow diagram illustrating the principal steps of a computer-implemented method according to an embodiment of the present invention, and again will be described with reference to the schematic diagram of a video gaming system shown in Figure 2.

At step S201, a frame rate monitor 300 monitors the current frame rate of the rendered (MFSR) graphics output from the super resolution engine. Through monitoring the frame rate of the rendered graphics output, the frame rate monitor is capable of detecting the occurrence of a high computational load event. For example, if the frame rate monitor 300 detects that the frame rate drops below a predetermined threshold, then this is indicative of a high computational load at the processor or processors performing the various processing steps during game deployment. Typically, this will be a graphics processing unit (GPU) of the system 1. The frame rate monitor 300 may monitor the usage of the GPU individually, or may measure the usage of the GPU and CPU together (e.g. if the CPU and GPU are integrated into a single processing unit).

Typically, the predetermined frame rate threshold is 60 frames per second, although it will be appreciated by the skilled person that the threshold may be varied accordingly, for example based on the system hardware, the game being deployed, or user preferences. The frame rate may be measured by the frame rate monitor 300 over a predetermined time period (e.g. between 30ms and 0.5 seconds), with the detection of a high computational load event being triggered if the average (e.g. mean) frame rate over that time period is less than the predetermined threshold. The time periods ("time windows") that the frame rate is measured during may be discrete, non-overlapping time periods, or may be overlapping in a "sliding window" arrangement.

At step S203, if the frame rate as monitored by the frame rate monitor 300 is determined to not be below the predetermined threshold (e.g. the frame rate detected by the frame rate monitor 300 is equal to or greater than 60 frames per second) then the high precision CNN 210a is selected (step S207) and used to generate the MFSR graphics. The flow chart returns to step S201 and the method iterates. In other words, the frame rate monitor 300 continues to monitor the frame rate of the graphics output from the super resolution engine 200.

Alternatively, if at step S203 the frame rate is detected to be below the predetermined threshold (e.g. the frame rate detected by the frame rate monitor 300 is less than 60 frames per second, indicating high usage of the GPU), then the method proceeds to step S205 where one of the quantized cached CNNs 201b, 210c is invoked in place of the high precision model 210a. In such a scenario, the frame rate monitor 300 sends a signal to Quantization Manager 220 which then selects one of the quantized CNNs 210b, 210c as will be explained in more detail herein.

In the schematic view of Figure 2, the Quantization Manager 220 is illustrated as being a component of the Super Resolution Engine 200. However, in alternative embodiments, the Quantization Manager may be a separate component from the Super Resolution Engine 200.

Following the selection and application of the quantized CNN in step S205, the method iterates to step S201. In other words, the frame rate monitor 300 continues to monitor the frame rate of the graphics output from the super resolution engine 200. Thus, if the frame rate has recovered following the application of the quantized model (i.e. the detected frame rate is equal to or above the predetermined threshold as determined in step S203), then the process proceeds to step S207 where the high precision CNN 210a is re-selected and the method returns to step S201. If, on the other hand, at step S203 it is determined that the frame rate has not recovered to a level equal to or above the predetermined threshold, the method maintains the use of a quantized CNN in step S205.

It is noted the process flow of Figure 1B is performed continuously as the game is deployed on the video gaming system and the MFSR graphics output is generated.

In the example outlined above, at step S203 the frame rate monitor 300 determines whether the frame rate of the MFSR graphics output (i.e. the output of the full MFSR graphics pipeline) is below a predetermined threshold. Alternatively or additionally, the frame rate monitor 300 may monitor the frame rate at an earlier stage in the graphics pipeline. For example, the frame rate monitor 300 may monitor the time taken by the graphics pipeline to render one or more "low resolution" image frames used as input into the selected CNN 210a,b,c. In such cases, as would be understood by the skilled person, a high load event would be detected (and thus lead to a selection of a quantized CNN) if the time taken to render the "low-resolution" images by the graphics pipeline increased above a predetermined threshold.

### Dynamic Quantization

As outlined above, in Step S205 one of the quantized CNNs 210b, 210c is applied if a high computational load event is detected in step S203.

Quantization is a process of converting the weights and/or activations of a model to use a reduced precision numerical data type representation. The weights and activations of the high precision CNN 210a in its "native" form have the highest precision data type of the cached models, for example float32 which occupies 32 bits in computer memory. The equivalent parameters of the quantized "medium" and "low" precision models 210b, 210c stored in memory have reduced precision in comparison with the model 210a, with the low precision model 210c using the lowest precision data type of the cached models. Non-limiting examples of lower precision data types that may be used in the quantized (lower precision) models include float16 and int8 data types which require 16 and 8 bits of compute memory respectively. Consequently, this reduction is storage and compute resources advantageously results in faster memory access and computation times by the processing unit when one of the quantized models 210b, 210c is used, meaning that the CNN inferences can be computed more quickly and the frame rate output from the super resolution engine 200 can recover to meet the predetermined threshold.

In this way, through the selection of a reduced precision quantized model in response to a detection of a high computational load event, the present invention does not change the resolution of the rendered graphics content output to the display device 400 in order to improve performance in terms of frame rate. Instead, the reduction in the precision of the weights and/or activations of the lower precision MFSR model temporarily reduces the accuracy of the super-resolution CNN inferences, thereby temporarily reducing the quality of the inferred MFSR graphics output until the frame rate recovers. However, this temporary reduction in the quality of the inferred MFSR graphics is acceptable in view of maintaining the desired frame rate and image resolution.

As briefly explained above with reference to Figure 1B, dependent on the determination made by the frame rate monitor at step S203, either the high precision CNN 201a is used (step S207), or one of the cached lower-precision quantized CNNs is deployed (step S205). The selection of which of the cached CNNs to use is made by the Quantization Manager 220, as will now be explained with reference to Figure 3.

In step S301, the Quantization Manager 220 receives the current frame rate from the frame rate monitor 300. As discussed above, this may be the frame rate of the final MFSR graphics output, or may be the current frame rate of the images generated by the graphic pipeline before being fed into the MFSR models.

At step 303, the Quantization Manager 220 dynamically selects a Quantization Level dependent on the frame rate information received in step S301 (e.g. a level of quantization required in dependence on the frame rate received from the Frame Rate Monitor 300). In this way, instead of using a fixed scale factor, the Quantization Manager 220 dynamically calculates a level of quantization to apply (as defined by the Quantization Level) based on the input graphics data received at runtime, e.g. based on the particular gameplay events at that time.

The Quantization Level is selected from a predetermined Quantization Level Index. Each value in the index is associated with one of the cached models 210a, 210b, 210c. In the present example, the Quantization Level Index has three discrete levels, represented by the values "0", "1" and "2". As schematically shown in Figure 2, the value "0" is associated with the high precision model 210a; the value "1" is associated with the medium precision model 210b, and the value "2" of the index is associated with the low precision CNN 210c. Thus, for example, a Quantization Level of "1" determined by the Quantization Manager will invoke the medium precision quantized CNN 210b, and a determined Quantization Level of "2" will invoke the low precision quantized CNN 210c.

The Quantization Level Index may be stored in the form of a look-up table, stored in memory and accessible by the Quantization Manager. Each quantization level may be associated with a predetermined frame rate range as detected by the Frame Rate Monitor 300.

Advantageously, the use of a Quantization Level Index together with multiple cached models enables a dynamic adjustment of the compute power required, dependent on the detected processing load. In this way, the CNN preserves as much of the important information as possible in generating the MFSR output, whilst simultaneously saving space and speeding up the processing calculations. For example, a slight reduction in detected frame rate may require the use of the medium precision CNN 210b to continue generating MFSR graphics output, whereas a high load point in a game may require the temporary application of the "low" precision CNN 210c in order to maintain an acceptable frame rate.

The weights of each cached CNN are precalculated and thus the speed of processing of each CNN can be calculated based on the hardware (e.g. available gigaflops power). This knowledge can be used by the Quantization Manager 220 to determine the Quantization Level required in dependence on the current frame rate (or frame timing) received in step S301. The graphics pipeline speed will be unpredictable, but CNN processing speed will be predictable so knowledge of both the current frame rate and the predicted CNN speed at the end of a frame can be used by the Quantization Manager 220 to determine the quantization required (if at all).

Following the determination of the Quantization Level in step S303, the process flow proceeds to step S305 where the cached CNN associated with the selected Quantization Level is selected to perform the MFSR for the current epoch.

As outlined above, the system 1 utilises a plurality of trained CNNs having different precisions stored in memory and that are accessible at runtime dependent on the current frame rate. The models have the same architectures (e.g. arrangement of nodes and connections), but with their weights and/or activations having different precisions, and are trained such that their outputs are substantially similar given similar input. Typically, training is performed using the high precision model 210a. The high precision weights established during training of the high precision model are then used as the initial training weights (having been rounded or truncated in accordance with the level of quantization) for the quantized models, rather than starting with random values.

Alternatively, it is envisaged that, once trained, the weights of the high precision model may simply be rounded or truncated to the desired precision level in order to generate the quantized models rather than training the quantized models as discussed above. However, this may not provide acceptable quality levels.

The neural networks used to perform the multi-frame super resolution are trained using techniques known in the art. Typically the CNNs are trained on a series of game captured frames (and their associated G-buffers) containing outputs from Game Engines playing games, with camera movements and object movements and a variety of scenes, lighting and colors on the screen, until the output is acceptable in a number of real world gaming scenarios and performant enough for the application.

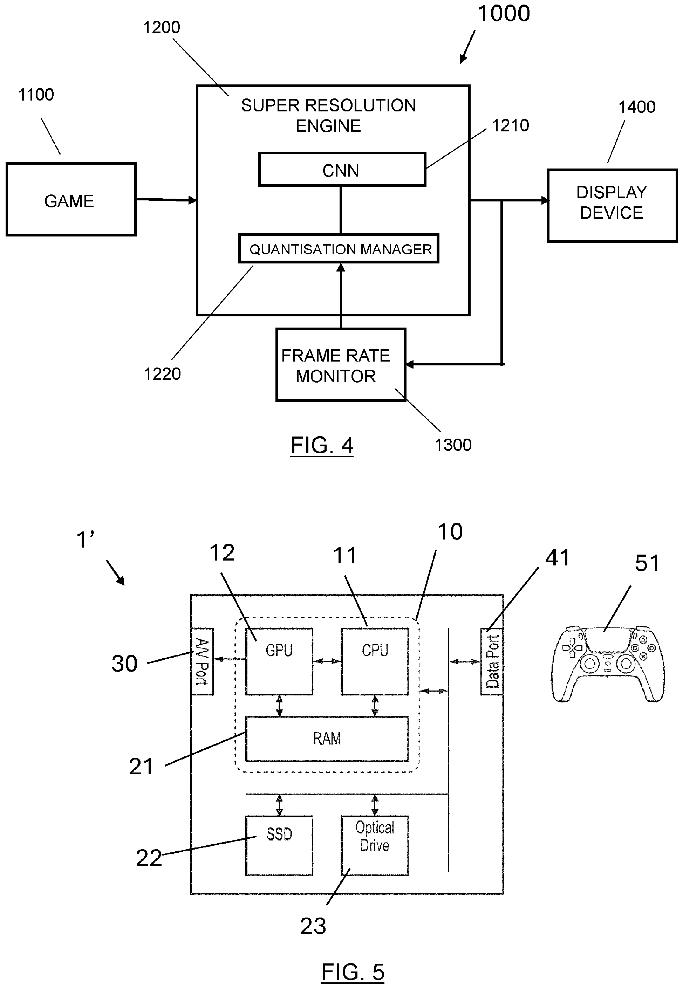

Figure 4 schematically illustrates various components of a video gaming system 1000 in accordance with a further embodiment of the invention. Similarly to the video gaming system 1 described with reference to Figure 2, the system 1000 comprises a super resolution engine 1200 that is configured to receive raw image data from a game 1100 deployed on the system and perform multi-frame super resolution techniques to generate an MFSR graphics output for display on display device 1400. The system 1000 also comprises a frame rate monitor 1300 and a quantisation manager 1220 similarly as discussed herein. However, in the system 1000 schematically illustrated in Figure 4, the super resolution engine 1200 comprises a single trained convolutional neural network 1210. The CNN 1200 is initially provided with weights and activations having a high precision (e.g. float32) as determined during training. In the embodiment of Figure 4, when the frame rate as monitored by the frame rate monitor 1300 drops below the predetermined threshold, instead of selecting one of a plurality of cached CNNs as in the system 1 of Figure 2, the quantisation manage 1220 dynamically quantizes (e.g. rounds and/or truncates) the weights and/or activations of the CNN 1210. The level of quantization of the weights and/or activations is in accordance with the frame rate as detected by the frame rate monitor.

Although such "real-time" quantization of the CNN 1210 used by the system 1000 reduces the amount of memory required to store the trained neural network 1210, quality of the inferred MFSR graphics output may be of reduced quality in comparison to the use of a selected, pre-trained model used in the system 1 described with reference to Figure 2.

### Example System Architecture

Figure 5 schematically shows an example of a video gaming system 1' usable to implement the methods of the present invention. The system includes a GPU 12, a CPU 11, in this case combined into a combined processing unit 10. In other examples, the CPU could be more separate from the GPU and not have access to the same shared RAM 21. The system 1 further includes storage such as an SSD memory 22 or optical drive 23 for storing game data. As in a conventional rendering pipeline, based on the current game state, the CPU 11 generates rendering commands such as draw calls and state changes to send to the GPU 12. These commands specify how objects should be rendered including their position, orientation textures, shades and other rendering parameters. The GPU 12 executes these rendering commands received from the CPU 11 to generate the final image displayed on the screen after output via the AV port 30.

In addition to the MFSR methods described herein, the rendering pipeline may comprise multiple stages such as vertex processing, primitive assembly, rasterization, fragment shading and output merging. The data transfer between CPU 11 and GPU 12 may be managed via APIs with the CPU 11 sending rendering commands and the GPU 12 sending back the rendered frames to be displayed and output by the AV port 30.

User input is typically provided using a handheld controller 51. The system 1 may transmit or receive data by one or more data ports 41, such as a USB port, ethernet port, WI-FI port or Bluetooth port.

### EMBODIMENTS

Although the present invention is defined in the claims, it should be understood that the present invention can also (alternatively) be defined in accordance with the following embodiments:
1. A computer-implemented method of generating a multi-frame super resolution, MFSR, graphics output for a video gaming system during gameplay, comprising:
   using a trained artificial neural network, ANN, comprising a plurality of weights and activations to perform multi-frame super resolution, MFSR, based on input graphics data from a game deployed on a video gaming system, to generate a MFSR graphics output;
   monitoring usage of a processing unit of the video gaming system during gameplay; and
   varying a precision of the weights and/or activations used in the performing MFSR, based on the monitored usage of the processing unit.
2. The method of embodiment 1, comprising detecting a high computational load event during gameplay; and
   in response to the detection of the high computational load event, reducing the precision of the weights and/or activations used in the performing MFSR.
3. The method of embodiment 2, wherein the high computational load event comprises a detected frame rate of the MFSR graphics output and/or a frame rate of the input graphics data being below a predetermined threshold.
4. The method of any of the preceding embodiments, wherein the video gaming system comprises a memory storing a plurality of trained ANNs, each trained ANN being configured to perform MFSR to generate an MFSR graphics output based on input graphics data from a game deployed on the video gaming system, and wherein the weights and/or activations of the plurality of trained ANNs have different precisions; and
   the varying a precision of the weights and/or activations used in the performing MFSR comprises selecting one of the plurality of trained ANNs from the memory based on the monitored usage of the processing unit.
5. The method of embodiment 4, wherein the plurality of trained ANNs stored in memory comprises a first trained ANN having weights and/or activations stored at a first precision and a second trained ANN having weights and/or activations stored at a second precision, wherein the second precision is lower the first precision.
6. The method of embodiment 5, wherein the weights and/or activations of the second trained ANN are quantized with respect to the weights and/or activations of the first trained ANN.
7. The method of embodiment 5 or embodiment 6, wherein the plurality of trained ANNs stored in memory comprises a third trained ANN having weights and/or activations stored at a third precision that is different from both the first precision and the second precision.
8. The method of any of embodiments 4 to 7, wherein the method comprises determining a quantization level in accordance with the monitored usage of the processing unit; and
   wherein the step of selecting one of the plurality of trained ANNs from the memory is performed in accordance with the determined quantization level.
9. The method of embodiment 8, wherein each of the plurality of trained ANNs stored in memory is associated with a respective quantization level.
10. The method of any of embodiments 1 to 3, wherein the varying a precision of the weights and/or activations used in the performing MFSR comprises varying the precision of the weights of the ANN used to perform MFSR in real-time.
11. The method of any of the preceding embodiments, wherein the input graphics data comprise a plurality of low-resolution game image frames.
12. The method of any of the preceding embodiments, wherein the MFSR graphics output comprises a plurality of high-resolution game image frames.
13. The method of any of the preceding embodiments, further comprising outputting the MFSR graphics output to a display device.
14. The method of any of the preceding embodiments, wherein the trained ANN(s) comprises a convolutional neural network.
15. A video gaming system for generating a multi-frame super resolution, MFSR, output during gameplay, comprising:
   one or more trained artificial neural networks, ANNs, comprising a plurality of weights and activations, configured to perform multi-frame super resolution, MFSR, based on input graphics data from a game deployed on the video gaming system, to generate an MFSR graphics output;
   a computational load monitor configured to monitor usage of a processing unit of the video gaming system during gameplay; and
   a quantization manager configured to vary a precision of the weights and/or activations used in the performing MFSR, based on the monitored usage of the processing unit.
16. The video gaming system of embodiment 15, wherein the computational load monitor comprises a frame rate monitor configured to monitor a frame rate of the MFSR graphics output and/or a frame rate of the input graphics data.
17. The video gaming system of embodiment 15 or embodiment 16, comprising a memory storing a plurality of trained ANNs, each trained ANN being configured to perform MFSR to generate an MFSR graphics output based on input graphics data from a game deployed on the video gaming system, and wherein the weights and/or activations of the plurality of trained ANNs have different precisions; and
   the quantization manager is configured to vary a precision of the weights and/or activations used in the performing MFSR by selecting one of the plurality of trained ANNs from the memory based on the monitored usage of the processing unit.
18. The video gaming system of any of embodiments 15 to 17, wherein the plurality of trained ANNs stored in memory comprises a first trained ANN having weights and/or activations stored at a first precision and a second trained ANN having weights and/or activations stored at a second precision, wherein the second precision is lower the first precision, preferably wherein
   the plurality of trained ANNs stored in memory comprises a third trained ANN having weights and/or activations stored at a third precision that is different from both the first precision and the second precision.
19. A video gaming system for generating a multi-frame super resolution, MFSR, output during gameplay, comprising at least one processor in communication with at least one memory device, the at least one memory device having stored thereon instructions for causing the at least one processor to perform the method of any of embodiments 1 to 14.
20. A computer program product comprising instructions which, when executed by a one or more processors, cause the processor(s) to perform the method of any of embodiments 1 to 14.

## Claims

1. A computer-implemented method of generating a multi-frame super resolution, MFSR, graphics output for a video gaming system during gameplay, comprising:
using a trained artificial neural network, ANN, comprising a plurality of weights and activations to perform multi-frame super resolution, MFSR, based on input graphics data from a game deployed on a video gaming system, to generate a MFSR graphics output;
monitoring usage of a processing unit of the video gaming system during gameplay; and
varying a precision of the weights and/or activations used in the performing MFSR, based on the monitored usage of the processing unit.

2. The method of claim 1, comprising detecting a high computational load event during gameplay; and
in response to the detection of the high computational load event, reducing the precision of the weights and/or activations used in the performing MFSR.

3. The method of claim 2, wherein the high computational load event comprises a detected frame rate of the MFSR graphics output and/or a frame rate of the input graphics data being below a predetermined threshold.

4. The method of any of the preceding claims, wherein the video gaming system comprises a memory storing a plurality of trained ANNs, each trained ANN being configured to perform MFSR to generate an MFSR graphics output based on input graphics data from a game deployed on the video gaming system, and wherein the weights and/or activations of the plurality of trained ANNs have different precisions; and
the varying a precision of the weights and/or activations used in the performing MFSR comprises selecting one of the plurality of trained ANNs from the memory based on the monitored usage of the processing unit.

5. The method of claim 4, wherein the plurality of trained ANNs stored in memory comprises a first trained ANN having weights and/or activations stored at a first precision and a second trained ANN having weights and/or activations stored at a second precision, wherein the second precision is lower the first precision.

6. The method of claim 5, wherein the weights and/or activations of the second trained ANN are quantized with respect to the weights and/or activations of the first trained ANN.

7. The method of claim 5 or claim 6, wherein the plurality of trained ANNs stored in memory comprises a third trained ANN having weights and/or activations stored at a third precision that is different from both the first precision and the second precision.

8. The method of any of claims 4 to 7, wherein the method comprises determining a quantization level in accordance with the monitored usage of the processing unit; and
wherein the step of selecting one of the plurality of trained ANNs from the memory is performed in accordance with the determined quantization level.

9. The method of claim 8, wherein each of the plurality of trained ANNs stored in memory is associated with a respective quantization level.

10. The method of any of claims 1 to 3, wherein the varying a precision of the weights and/or activations used in the performing MFSR comprises varying the precision of the weights of the ANN used to perform MFSR in real-time.

11. The method of any of the preceding claims, wherein one or more of:
the input graphics data comprise a plurality of low-resolution game image frames, and
the MFSR graphics output comprises a plurality of high-resolution game image frames.

12. The method of any of the preceding claims, further comprising outputting the MFSR graphics output to a display device.

13. The method of any of the preceding claims, wherein the trained ANN(s) comprises a convolutional neural network.

14. A video gaming system for generating a multi-frame super resolution, MFSR, output during gameplay, comprising at least one processor in communication with at least one memory device, the at least one memory device having stored thereon instructions for causing the at least one processor to perform the method of any of claims 1 to 13.

15. A computer program product comprising instructions which, when executed by a one or more processors, cause the processor(s) to perform the method of any of claims 1 to 13.
